Europäisches Patentamt

(19) European Patent Office

Office européen des brevets

(11) Publication number : **0 355 101 B1**

(12) **EUROPEAN PATENT SPECIFICATION**

(45) Date of publication of patent specification :
**19.02.92 Bulletin 92/08**

(51) Int. Cl.⁵ : **E01C 19/26**

(21) Application number : **88903257.9**

(22) Date of filing : **12.04.88**

(86) International application number :
**PCT/FI88/00053**

(87) International publication number :
**WO 88/08053 20.10.88 Gazette 88/23**

(54) **A METHOD FOR ARRANGING THE COOLING IN A COMPACTOR AND A COOLING SYSTEM FOR THE REALIZATION OF THE METHOD.**

(30) Priority : **14.04.87 FI 871624**

(43) Date of publication of application :
**28.02.90 Bulletin 90/09**

(45) Publication of the grant of the patent :
**19.02.92 Bulletin 92/08**

(84) Designated Contracting States :
**AT BE CH DE FR GB IT LI LU NL SE**

(56) References cited :
**DE-A- 2 634 672**
**US-A- 4 342 485**

(73) Proprietor : **TANA-JYRÄ KY**
**PI 7**
**SF-40801 Vaajakoski (FI)**

(72) Inventor : **SINKKONEN, Matti**
**Talo 22**
**SF-40800 Vaajakoski (FI)**

(74) Representative : **Lauw, Rudolf C. W. et al**
**Patentanwalt Karwinskistrasse 1**
**W-8000 München 60 (DE)**

## Description

The object of this invention is a method for arranging cooling in a compactor equipped with at least one roller drum, and in which the motor and/or other equipment, for example the hydraulic system, has forced circulation water cooling or water cooled forced circulation air cooling (see, for example, DE-A-2 634 672). The invention is also directed at a cooling system intended to realize the method. In this the circulation water means any liquid medium at all that is intended to transfer heat, most typically a mixture of water and an anti-freeze agent. The oil circulation circuit means the circuits of an hydraulic system at its most typical.

In an ordinary cooling system the hot water coming from the motor is led to a cellular radiator, in which efficient heat transfer is aimed at by a large ribbed surface area. The working conditions of compactors are, among other places, garbage tips and coal fields, which are very dusty. This causes choking in the cells of the radiator, which often leads to the motor overheating. Taking the area of the invention broadly it includes the US publication US-A-4 342 485, which shows sprinkler cooling of a planet gearbox installed inside the drum of a surface compactor for asphalt or concrete roads. According to this the cooling is improved by partially filling the drum with cooling liquid, which effectively conducts the heat from the surface of the gearbox to the surface of the drum.

A compactor cooling system, in which either the cooling water of the motor or of a separate auxiliary cooling circuit is made to travel through a roller drum, when it washes against the outer cover of the drum and thus gives up its heat to it, is know from the Finnish Patent Application 853991 (corresponding to PCT/FI86/00116, wo-A-8 702 397). This is realized most simply in such a way that the circulating water is fed in through one end of the drum roller and out through the other end. Two revolving pipe connectors are required for this.

The intention of this invention is to create a simpler and more effective cooling method than before in roller-cooled compactors, and a cooling system to realize the method. The characteristics of the method in accordance with the invention appear in the accompanying Claim 1 and of the cooling system intended to realize the method in the accompanying Claims 2 and 3.

In the following the invention is more closely illustrated by means of descriptions and accompanying figures, which present some forms of application of the invention.

Figure 1 shows a compactor, in which there is roller drum cooling.

Figure 2 shows an outline diagram of the cooling system.

Figure 3 shows one other kind of cooling system.

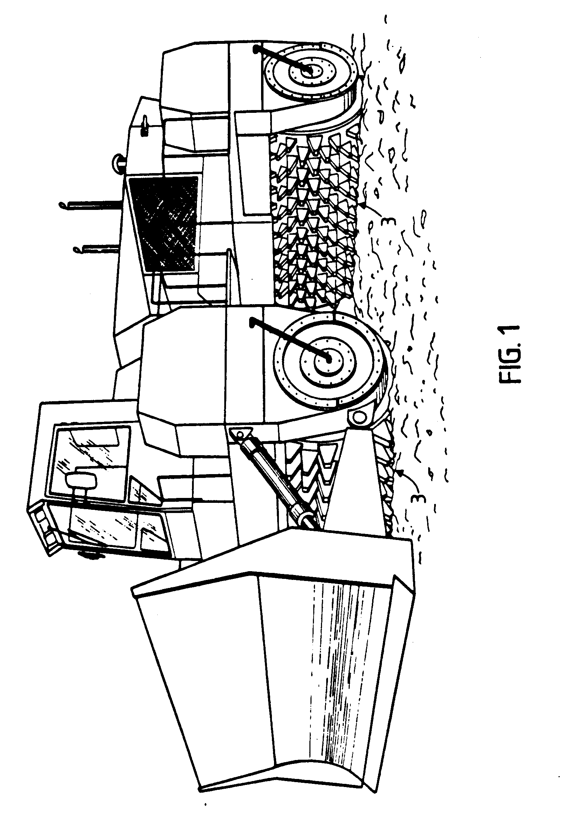

The power of the motor of a large compactor is typically 400 hp (300 kW). In acompactor of this kind cooling power amounting to about 110 kW at most is required when the cooling required by the hydraulic system is taken into account as well. The length of the roller in Figure 1 is about 4 m and its surface area is sufficient to transfer the heat from the roller even in hot conditions.

In a smaller size of compactor than the previous one the motor power is typically 300 hp (220kW) and the length of roller correspondingly 3m. The length of the roller and thus its heat transfer surface area is nearly proportional to the size of the compactor and its motor in compactors with a modular construction.

Heat is transferred from the roller principally to the ground, because the effectiveness of transfer to the air is small unless it is improved by means of ventilation and sprinkling. Often, however, the material to be compacted, for example rubbish on a garbage tip, is so wet that the surface of the roller becomes wet and the heat transfer is improved naturally too by means of the phenomenon of evaporation. In compactors used in among other things the compaction of garbage spikes are placed on the rollers and these considerably improve the heat transfer, as in the compactor in Figure 1. It is advantageous if the water is able to circulate in the spikes. This figure shows a system, in which the cooling circulating water inlet pipe is connected to the end of the roller 3.

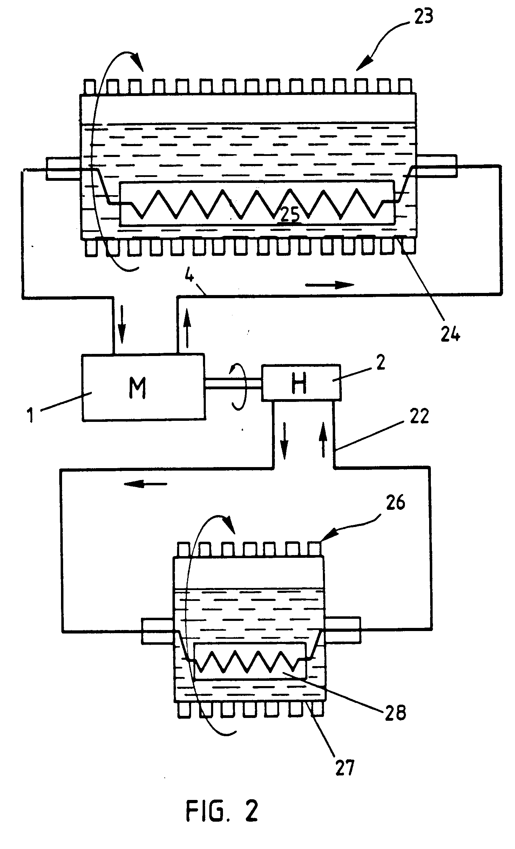

In Figure 2 a cooling system is shown for the next smallest compactor size after the previous one. The roller drums of the compactor are of different sizes and in the same way the heat transfer surfaces areas are thus different. In this cooling system the water circulation circuit 4 of the motor 1 and oil circulation circuit 22 of the hydraulic system 2 include cooling heat exchangers 25 and 28 which are located inside the rollers 23 and 26, when additional pumps are not needed at all. In connection with the rollers 23 and 26 of different size the cooling power can be adapted directly to correspond to the cooling power required by both the motor 1 and the hydraulic system 2 in such a way that the larger roller 23 is used for the cooling of the motor 1 and the smaller roller 26 is used for the cooling of the hydraulic system 2. The cooling of the motor 1 takes place by means of the heat exchanger 25 which belongs to the water circulation circuit 4 and is located in the roller 23, and from which heat is transferred to the cooling liquid inside the roller and by means of this to the outer cover 24 of the roller. As the roller 23 revolves the heat is transferred both from the heat exchanger 25 to the coolant and from it in turn to the outer cover 24 with the aid of forced convection, as the revolution creates a considerable speed of flow in the coolant. The cooling of the hydraulic system 2 operates in a corresponding manner in the smaller roller 26. Heat is transferred from the oil circulation circuit 22 from the heat exchanger 28 in the roller 26 to the coolant and from this in turn to the outer cover 27.

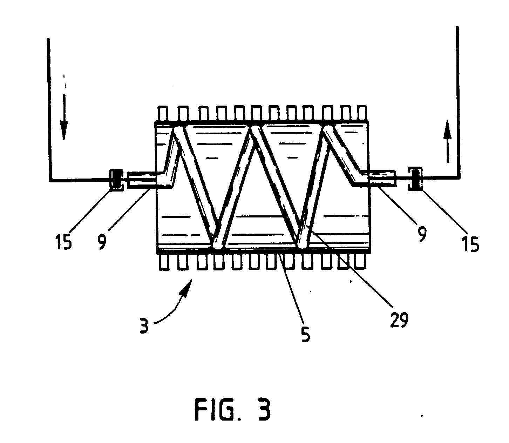

An alternative method of installing the heat exchanger in the roller is shown in Figure 3. In this the water and oil circulation connections to the roller drum 3 are of the same kind as those shown in application FI853991 (wo-A-8 702 397). The circuits to be cooled are connected to the revolving roller by means of the connector 15, which permits revolution and which is installed inside the axle pin 9. In this case the heat transfer surface 29 can be welded permanently directly to the outer cover 5 of the roller drum 3, where the heat exchange is especially effective.

### Claims

1. A method for arranging the cooling in a compactor equipped with at least one roller drum (23,26), in which the motor (1) and/or other equipment, for example a hydraulic system (2) has forced circulation water cooling (4) or water cooled forced circulation air cooling and/or formed circulation oil cooling (22) **characterized** in that the cooling water and/or oil to be cooled is circulated through a heat exchanger (25,28) located in the roller (23,26) from which the heat is transferred to the outer cover (24,27) of the roller.

2. A cooling system for a compactor, intended to realize the method in accordance with Claim 1, which includes a water circulation (4) or oil circulation circuit (22) cooling the motor (1) and /or other equipment to be cooled, characterized in that the cooling water and/or oil to be cooled is made to travel through the roller drum (23,26) to transfer its heat from the roller to the ground and the air, that the water circulation and/or oil circulation circuit (4, 22) includes a heat exchanger (25, 28) located inside the roller drum (23, 26) and that the roller drum (23, 26) is filled with cooling liquid to transfer the heat from the heat exchanger (25, 28) to the outer cover (24, 27) of the roller.

3. A cooling system for a compactor, intended to realize the method in accordance with Claim 1, which includes a water circulation (4) and/or oil circulation circuit (22) cooling the motor (1) and/or other equipment to be cooled, characterized in that the cooling water and/or oil to be cooled is made to travel through the roller drum (3) to transfer the heat from the roller to the ground and the air and that the water circulation and/or oil circulation circuit (4, 22) includes a heat exchanger located inside the roller drum (3), the heat exchanging surface (29) of which is set against the outer cover (5) of the roller drum (3).

### Patentansprüche

1. Ein Verfahren zur Anordnung der Kühlung in einem Kompaktor bzw. Verdichter, der mit mindestens einer Roll-Trommel (23,26) versehen ist, in der der Motor (1) und/oder andere Einrichtungen, beispielsweise ein Hydrauliksystem (2) eine Zwangs-Zirkulations-Wasser-Kühlung (4) oder eine wassergekühlte Zwangs-Zirkulations-Luft-Kühlung und/oder eine Zwangs-Zirkulations-Öl-Rühlung (22) aufweist, **dadurch gekennzeichnet** , daß das zu kühlende Kühlwasser und/oder Öl durch einen in der Roll-Trommel (23,26) angeordneten Wärmetauscher (25,28) zirkuliert, von dem die Wärme zur Außenwand (24,27) der Roll-Trommel abgeführt wird.

2. Ein Kühlungsystem für einen Kompaktor zur Durchführung des Verfahrens nach Anspruch 1, das eine den Motor (1) kühlende Wasserzirkulation (4) oder einen Ölzirkulationskreis (22) und/oder eine andere zu kühlende Einrichtung aufweist, **dadurch gekennzeichnet** , daß das Kühlwasser und/oder das zu kühlende Öl dazu veranlaßt werden, sich durch die Roll-Trommel (23,26) zu bewegen, um die Wärme von der Roll-Trommel zum Boden oder in die Luft abzuführen, daß die Wasserzirkulation und/oder der zirkulierende Ölkreis (4,22) einen Wärmetauscher (25,28) aufweist, der innerhalb der Roll-Trommel (23,26) angeordnet ist, und daß die Roll-Trommel (23,26) mit Kühlflüssigkeit gefüllt ist, um die Wärme vom Wärmetauscher (25,28) zur Außenwand (24,27) der Roll-Trommel abzuführen.

3. Ein Kühlungsystem für einen Kompaktor zur Durchführung des Verfahrens nach Anspruch 1, das eine den Motor (1) kühlende Wasserzirkulation (4) oder einen Ölzirkulationskreis (22) und/oder eine andere zu kühlende Einrichtung aufweist, **dadurch gekennzeichnet** , daß das Kühlwasser und/oder zu das kühlende Öl dazu veranlaßt werden, sich durch die Roll-Trommel (23,26) zu bewegen, um die Wärme von der Roll-Trommel zum Boden oder in die Luft abzuführen, daß die Wasserzirkulation und/oder der zirkulierende Ölkreis (4,22) einen Wärmetauscher (25,28) aufweist, der innerhalb der Roll-Trommel (23,26) angeordnet ist, und dessen Wärmeaustauschoberfläche (29) an der Außenwand (5) der Roll-Trommel (3) anliegt.

### Revendications

1. Procédé pour effectuer le refroidissement dans un engin de compactage équipé d'au moins un rouleau presseur (23,24), dans lequel le moteur (1) et/ou les autres équipements, par exemple le système hydraulique (2) est muni d'un refroidissement à circulation d'eau forcée (4) ou d'un refroidissement par ventilation forcée refroidie par eau et/ou d'un refroidissement à circulation d'huile forcée (22), caractérisé en ce que l'eau et/ou l'huile de refroidissement circule à travers un échangeur de chaleur (25, 28) disposé dans le rouleau (23, 26), à partir duquel la chaleur est transférée au revêtement extérieur (24, 27) du rouleau.

3. Système de refroidissement permettant la mise en oeuvre du procédé selon la revendication 1 comprenant un circuit de circulation d'eau (4) ou de circulation d'huile (22) refroidissant le moteur (1) et/ou d'autres équipements à refroidir, caractérisé en ce que l'eau de refroidissement et/ou l'huile à refroidir circule à travers le rouleau (23, 26) afin de transférer sa chaleur du rouleau vers le sol et l'air, que le circuit de circulation de l'eau et/ou de l'huile (4, 22) comprend un échangeur de chaleur (25, 28) disposé à l'intérieur du rouleau (23, 26) et que le rouleau (23, 26) est rempli d'un liquide de refroidissement pour transférer la chaleur de l'échangeur de chaleur (25, 28) au revêtement extérieur (24, 27) du rouleau.

3. Système de refroidissement permettant la mise en oeuvre du procédé selon la revendication 1 comprenant un circuit de circulation d'eau (4) ou de circulation d'huile (22) refroidissant le moteur (1) et/ou d'autres équipements à refroidir, caractérisé en ce que l'eau de refroidissement et/ou l'huile à refroidir circule à travers le rouleau (3) afin de transférer la chaleur du rouleau vers le sol et l'air, et que le circuit de circulation de l'eau et/ou de l'huile (4, 22) comprend un échangeur de chaleur (25, 28) disposé à l'intérieur du rouleau (3) dont la surface d'échange de la chaleur (29) est disposé contre le revêtement extérieur (5) du rouleau (3).

FIG. 1

FIG. 2

FIG. 3